# Europäisches Patentamt

## European Patent Office

## Office européen des brevets

(11) Veröffentlichungsnummer: **0 180 698**
**B1**

(12) **EUROPÄISCHE PATENTSCHRIFT**

(45) Veröffentlichungstag der Patentschrift:
26.07.89

(21) Anmeldenummer: **85100658.5**

(22) Anmeldetag: **23.01.85**

(51) Int. Cl.⁴: **B 62 D 55/24,** B 62 D 55/04

(54) Gleiskette für Baufahrzeuge oder dergleichen.

(30) Priorität: 05.11.84 DE 8432310 U

(43) Veröffentlichungstag der Anmeldung:
14.05.86 Patentblatt 86/20

(45) Bekanntmachung des Hinweises auf die Patenterteilung:
26.07.89 Patentblatt 89/30

(84) Benannte Vertragsstaaten:
BE DE FR GB NL SE

(56) Entgegenhaltungen:
DE-A- 1 505 007
DE-A- 2 614 963
DE-C- 471 916
US-A- 2 338 550
US-A- 3 093 423

(73) Patentinhaber: **FELASTO PUR GMBH & CO. KG,
Wilhelm-Giese-Strasse, D-2855 Beverstedt (DE)**

(72) Erfinder: **Oerding, Horst, Logestrasse 55,
D-2855 Beverstedt (DE)**

(74) Vertreter: **Goddar, Heinz J., Dr. et al, FORRESTER &
BOEHMERT Widenmayerstrasse 4/l,
D-8000 München 22 (DE)**

## Beschreibung

Die Erfindung betrifft eine Gleiskette für wenigstens vier gummibereifte Einzelräder aufweisende Baufahrzeuge oder dergleichen, mit einer Anzahl aus elastischem Kunststoffmaterial, wie Polyurethan oder dergleichen, im Giess- oder Spritzgiessverfahren hergestellten Bodenplatten, mindestens jeweils zwei die einzelnen Bodenplatten in Gleiskettenrichtung durchsetzenden Zugbolzen aus Metall oder dergleichen und die Zugbolzen jeweils in Gleiskettenrichtung benachbarter Bodenplatten miteinander verbindenden Koppelgliedern.

Bei bekannten Gleisketten der vorstehend beschriebenen Art weisen die einzelnen Bodenplatten gleiskettenrichtungparallele Bohrungen auf, den Seitenrändern der Gleiskette benachbart, die von einem lose hindurchsteckbaren Zugbolzen durchsetzt sind. Der Zugbolzen weist dabei an seinem einen Ende einen Gabelkopf und an seinem anderen Ende eine von einer Querbohrung durchsetzte Abflachung auf, die in den jeweiligen Gabelkopf des jeweils nächstfolgenden Bolzens einsteckbar ist, woraufhin dann, beim Zusammensetzen der Gleiskette aus den einzelnen Bodenplatten, eine die vorgenannte Bohrung und den Gabelkopf durchsetzende Querschraube hindurchgesteckt und angezogen wird. Nachteilig ist bei diesen bekannten Gleisketten, die in bekannter Weise dazu verwendet werden, gummibereifte Einzelräder aufweisende Fahrzeuge bedarfsweise geländegängig zu machen, dass die gesamten Zugkräfte, welche mit wachsender Motorleistung des Baufahrzeuges oder dergleichen natürlich ansteigen, durch den beschriebenen Querbolzen bzw. die entsprechenden Verbindungsteile der Zugbolzen aufgenommen werden müssen, wodurch es bei erschwerten Betriebsbedingungen leicht zu Ermüdungsbrüchen kommen kann. Auch lässt bei den bekannten Gleisketten die Haftung der einzelnen Bodenplatten auf den gummibereiften Einzelrädern zu wünschen übrig, wobei dies jedoch bei den bekannten Gleisketten der gattungsgemässen Art nicht von besonderer Bedeutung ist, weil infolge der beschriebenen Konstruktion der Zugbolzen und Koppelglieder ohnehin keine allzu starken Kräfte von den Einzelrädern auf die Gleisketten aufgebracht werden dürfen.

Der Erfindung liegt die Aufgabe zugrunde, eine Gleiskette der eingangs genannten Art zu schaffen, welche bei wirtschaftlicher Herstellbarkeit auch gegenüber hohen Antriebsleistungen der Einzelräder des Fahrzeuges erheblich robuster ist als die bisher bekannten Gleisketten.

Diese Aufgabe wird erfindungsgemäss dadurch gelöst, dass die Zugbolzen langgestreckte, geschlossene, jeweils mit ihren Enden über die quer zur Gleiskettenrichtung liegenden Stirnflächen der Bodenplatten hinausragende, in das Material der jeweiligen Bodenplatte eingegossene Kettenglieder sind.

Dabei kann vorgesehen sein, dass die Koppelglieder geschlossene, in die Endbögen jeweils zweier in Gleiskettenrichtung einander benachbarter Kettenglieder eingreifende Kettenbögen sind,

Die Erfindung sieht gegebenenfalls weiterhin ebenenfalls vor, dass die Kettenbögen an ihrer jeweiligen Nahtstelle verschweisst sind.

Eine weitere Ausführungsform der Erfindung ist dadurch gekennzeichnet, dass an der Innenfläche jeder Bodenplatte ein Profilstollen zum In-Eingriff-Kommen mit der Profilierung der gummibereiften Einzelräder des Baufahrzeuges oder dergleichen vorgesehen ist.

Auch kann erfindungsgemäss vorgesehen sein, dass der Profilstollen in Gleiskettenrichtung eine geringere Breite hat als senkrecht hierzu.

Die Erfindung zeichnet sich weiterhin gegebenenfalls dadurch aus, dass der Profilstollen etwa mittig auf der jeweiligen Bodenplatte angeordnet ist.

Auch kann vorgesehen sein, dass der Profilstollen einstückig mit der Bodenplatte hergestellt ist.

Eine weitere Ausführungsform der Erfindung sieht vor, dass die Kettenglieder mit einem Haftvermittler bezüglich des Kunststoffmaterials der Bodenplatten versehen sind.

Schliesslich kann erfindungsgemäss auch vorgesehen sein, dass die in das Material der jeweiligen Bodenplatte eingegossenen Kettenglieder mit Ausnahme ihrer zum Eingriff der Kettenbögen dienenden Endbögen von dem Kunststoffmaterial voll umschlossen sind.

Die überraschende Wirkung der Erfindung beruht darauf, dass die eingegossenen Kettenglieder, die über ihre gesamte eingegossene Länge kraftschlüssig mit dem Material der jeweiligen Bodenplatte verbunden sind, im Zusammenwirken mit den als Koppelgliedern vorgesehenen Kettenbögen wesentlich robuster sind als die Kombination der aus dem Stand der Technik bekannten Steckbolzen mit entsprechenden Querbolzen, die dort als Koppelglieder dienen. Darüber hinaus gewährleisten die erfindungsgemäss vorzugsweise vorgesehenen Profilstollen gleichsam ein »Verkrallen« der Bodenplatten mit dem Profil der gummibereiften Einzelräder, womit insgesamt bei hoher Verschleissfestigkeit eine einwandfreie Übertragung auch erheblicher Antriebskräfte auf die Standfläche der Gleiskette gewährleistet ist.

Weitere Merkmale und Vorteile der Erfindung ergeben sich aus der nachstehenden Beschreibung, in der ein Ausführungsbeispiel anhand der schematischen Zeichnung im einzelnen erläutert ist. Dabei zeigt:

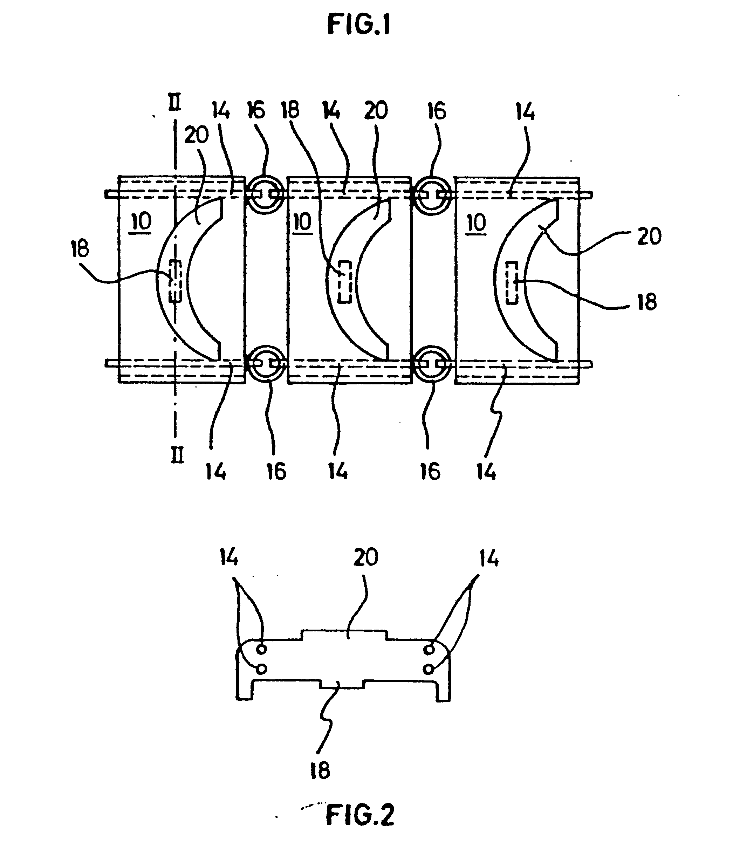

Fig. 1 ein Ausführungsbeispiel eines Abschnittes einer Gleiskette nach der Erfindung in der Draufsicht; und

Fig. 2 einen Schnitt entlang der Linie II–II von Fig. 1.

Wie die Zeichnung erkennen lässt, weist der dort gezeigte Gleiskettenabschnitt eine Anzahl von Bodenplatten 10 auf, die jeweils in Gleiskettenrichtung von zwei als Zugbolzen dienenden Kettengliedern 14 durchsetzt sind. Die in Gleiskettenrichtung einander zugewandten Endbögen je zweier Kettenglieder 14 sind mittels Kettenbögen 16, die an ihren jeweiligen Nahtstellen beispielsweise verschweisst sein können, mitteinander verbunden. Die Kettenglieder 14 sind vor dem Eingiessen in das Kunststoffmaterial der Bodenplatten 10, beispielsweise Polyurethan, vorzugsweise mit einem Haftgrund, wie zum Beispiel Thixon, behandelt worden, um eine einwandfreie kraftschlüssige Verbindung zwischen den eingegossenen Kettengliedern 14 und den jeweiligen Bodenplatten 10 zu gewährleisten.

An der Innnenseite jeder Bodenplatte 10 ist ein Profilstollen 18 vorgesehen, der das Eingreifen der Bodenplatte in die Profilierung der gummibereiften Einzelräder eines Baufahrzeuges oder dergleichen gewährleistet. An der Oberseite weist jede der Bodenplatten eine herkömmliche Profilierung 20 auf, die den Kontakt mit dem Boden, auf dem das Gleiskettenfahrzeug sich bewegen soll, verbessert.

Anzumerken ist noch, dass statt geschweisster Kettenglieder 14 innerhalb des Erfindungsgedankens beispielsweise auch Schäkel oder andere Kettenverbinder verwendet werden können. Auch dabei haben die in der Bodenplatte befindlichen, mit Ausnahme ihrer zum Eingriff der Kettenbögen 16 dienenden Endbögen voll von Kunststoffmaterial, insbesondere Polyurethan, umschlossenen Kettenglieder 14 den Vorteil der besseren formschlüssigen Verbindung zwischen den Kettengliedern und der Bodenplatte, wodurch die Kraftübertragung wesentlich verbessert wird. Die einzelnen Bodenplatten sind anders als beim Stand der Technik begrenzt gegeneinander beweglich, wodurch ein besseres Anliegen der Bodenplatten an den Gummireifen erreicht wird, ebenfalls bedingt durch die neuartigen Kettenglieder bzw. ähnlich wirkende Kettenverbinder.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Gleiskette für wenigstens vier gummibereifte Einzelräder aufweisende Baufahrzeuge oder dergleichen, mit einer Anzahl aus elastischem Kunststoffmaterial, wie Polyurethan oder dergleichen, im Giess- oder Spritzgiessverfahren hergestellten Bodenplatten (10), mindestens jeweils zwei die einzelnen Bodenplatten in Gleiskettenrichtung durchsetzenden Zugbolzen (14) aus Metall oder dergleichen und die Zugbolzen (14) jeweils in Gleiskettenrichtung benachbarter Bodenplatten (10) miteinander verbindenden Koppelgliedern (14), dadurch gekennzeichnet, dass die Zugbolzen (14) langgestreckte, geschlossene, jeweils mit ihren Enden über die quer zur Gleiskettenrichtung liegenden Stirnflächen der Bodenplatten hinausragende, in das Material der jeweiligen Bodenplatte (10) eingegossene Kettenglieder (14) sind.

2. Gleiskette nach Anspruch 1, dadurch gekennzeichnet, dass die Koppelglieder geschlossene, in die Endbögen jeweils zweier in Gleiskettentenrichtung einander benachbarter Kettenglieder (14) eingreifende Kettenbögen (16) sind.

3. Gleiskette nach Anspruch 2, dadurch gekennzeichnet, dass die Kettenbögen (16) an ihrer jeweiligen Nahtstelle verschweisst sind.

4. Gleiskette nach einem der vorangehenden Ansprüche, dadurch gekennzeichnet, dass an der Innenfläche jeder Bodenplatte (10) ein Profilstollen (18) zum In-Eingriff-Kommen mit der Profilierung der gummibereiften Einzelräder des Baufahrzeuges oder dergleichen vorgesehen ist.

5. Gleiskette nach Anspruch 4, dadurch gekennzeichnet, dass der Profilstollen (18) in Gleiskettenrichtung eine geringere Breite hat als senkrecht hierzu.

6. Gleiskette nach Anspruch 5, dadurch gekennzeichnet, dass der Profilstollen (18) etwa mittig auf der jeweiligen Bodenplatte (10) angeordnet ist.

7. Gleiskette nach einem der Ansprüche 4 bis 6, dadurch gekennzeichnet, dass der Profilstollen (18) einstückig mit der Bodenplatte (10) hergestellt ist.

8 Gleiskette nach einem der vorangehenden Ansprüche, dadurch gekennzeichnet, dass die Kettenglieder (14) mit einem Haftvermittler bezüglich des Kunststoffmaterials der Bodenplatten (10) versehen sind.

9. Gleiskette nach einem der vorangehenden Ansprüche, dadurch gekennzeichnet, dass die in das Material der jeweiligen Bodenplatte (10) eingegossenen Kettenglieder (14) mit Ausnahme ihrer zum Eingriff der Kettenbögen (16) dienenden Endbögen von dem Kunststoffmaterial voll umschlossen sind.

## Revendications

1. Chenille pour véhicules de chantier, ou similaires, présentant au moins quatre roues individuelles à bandage caoutchouc, avec un certain nombre de plaques de sol (10) fabriquées en matière plastique élastique, comme le polyuréthane ou similaire, selon un procédé à coulée ou à injection, avec au moins chaque fois deux boulons de traction (14) en métal ou similaire, traversant les plaques de sol individuelles en direction de la chenille, et des organes d'accouplement (16) reliant entre eux les boulons de traction (14) de plaques de sol (10) chaque fois voisines dans la direction de la chenille, caractérisée en ce que les boulons de traction (14) sont des maillons de chaîne (14) allongés, fermés, émergeant chaque fois par leurs extrémités sur les faces frontales situées transversalement à la direction de la chenille, coulés dans la matière de chaque plaque de sol (10).

2. Chenille selon la revendication 1, caractérisée en ce que les organes d'accouplement sont des arcs de chaîne (16) venant en prise dans les arcs d'extrémité de chaque fois deux maillons de chaîne (14) voisins l'un de l'autre en direction de la chenille.

3. Chenille selon la revendication 2, caractérisée en ce que les arcs de chaîne (16) sont soudés à chacune de leur fonction.

4. Chenille selon l'une des revendications précédentes, caractérisée en ce qu'un crampon profilé (18) est prévu sur la face interne de chaque plaque de sol (10), pour venir en prise sur le profilage des roues individuelles à bandage caoutchouc du véhicule de chantier ou similaire.

5. Chenille selon la revendication 4, caractérisée en ce que le crampon profilé (18) présente une largeur plus faible dans la direction de la chenille que transversalement à celle-ci.

6. Chenille selon la revendication 5, caractérisée en ce que le crampon profilé (18) est disposé à peu près au centre de chaque plaque de sol (10).

7. Chenille selon l'une des revendications 4 à 6, caractérisée en ce que le crampon profil (18) est fabriqué d'une seule piéce avec la plaque de sol (10).

8. Chenille selon l'une des revendications précédentes, caratérisée en ce que les maillons de chaîne (14) sont pourvus d'un agent adhésif pour la matière plastique des plaque de sol (10).

9. Chenille selon l'une des revendications précédentes, caractérisée en ce que les maillons de chaîne (14) coulés dans la matière de chaque plaque de sol (10) sont complètement entourés par la matière plastique, à l'exception de ses arcs d'extrémités servant à la prise des arcs de chaîne (16).

## Claims

1. A caterpillar track for construction machines or the like having at least four rubber-tyred individual wheels, comprising a plurality of treads (10) made from an elastic plastics material, such as polyurethane or the like, by casting or injection moulding, at least two tension pins (14) of metal or the like each extending through the individual treads in the direction of the caterpillar track, and coupling members (16) which interconnect the tension pins (14) of adjacent treads (10) in the direction of the caterpillar track, characterised in that the tension pins (14) are elongate, closed chain links (14) each projecting by their ends beyond the tread end faces disposed transversely of the direction of the caterpillar track, said chain links (14) being cast into the material of the associated tread (10).

2. A caterpillar track according to claim 1, characterised in that the coupling members are closed arcuate chain members (16) engaging in the end arcuate members of each pair of chain links (14) adjacent one another in the direction of the caterpillar track.

3. A caterpillar track according to claim 2, characterised in that the arcuate chain members (16) are welded at their associated seam.

4. A caterpillar track according to any one of the preceding claims, characterised in that a profiled tunnel (18) is provided at the inner surface of each tread (10) to engage with the profiling of the rubber-tyred individual wheels of the construction machine or the like.

5. A caterpillar track according to claim 4, characterised in that the profiled tunnel (18) has a narrower width in the direction of the caterpillar track than perpendicularly thereto.

6. A caterpillar track according to claim 5, characterised in that the profiled tunnel (18) is disposed substantially centrally on the associated tread (10).

7. A caterpillar track according to any one of claims 4 to 6, characterised in that the profiled tunnel (18) is made in one piece with the tread (10).

8. A caterpillar track according to any one of the preceding claims, characterised in that the chain links (14) are provided with an adhesive agent in respect of the plastics material of the treads (10).

9. A caterpillar track according to any one of the preceding claims, characterised in that the chain links (14) cast into the material of the associated tread (10) are fully enclosed by the plastics material except for their end arcuate parts serving for engagement of the arcuate chain parts (16).

# FIG.1

# FIG.2